Europäisches Patentamt

European Patent Office

Office européen des brevets

(19)

(11) **EP 1 657 566 A1**

(12) # EUROPEAN PATENT APPLICATION

(43) Date of publication:
**17.05.2006 Bulletin 2006/20**

(51) Int Cl.:
*G01S 13/26* (2006.01)    *G01S 7/285* (2006.01)

(21) Application number: **04445117.7**

(22) Date of filing: **16.11.2004**

(84) Designated Contracting States:
**AT BE BG CH CY CZ DE DK EE ES FI FR GB GR
HU IE IS IT LI LU MC NL PL PT RO SE SI SK TR**
Designated Extension States:
**AL HR LT LV MK YU**

(71) Applicant: **SAAB AB**
**581 88 Linköping (SE)**

(72) Inventor: **Hämäläinen, Mikael**
**754 20 Uppsala (SE)**

(74) Representative: **Falk, Bengt et al**
**Saab Bofors Support AB**
**Patents and Trademarks**
**691 80 Karlskoga (SE)**

(54) **Method for improving the radar range accuracy**

(57)    The invention relates to a method for improved radar range accuracy utilizing a simulated amplitude-based monopulse technique. According to the method, the signal from a conventionally focused radar image is utilized for generating a summation signal and a difference signal in the range direction. The summation signal is generated in the frequency domain by amplitude weighting (step 5.6) of the signal from the focused image. The difference signal is likewise formed by amplitude weighting (step 5.7) of the signal from the focused image. The summation signal and the difference signal are transformed to the time domain (steps 5.8 and 5.9) and an error signal is formed (step 5.10) based on the quotient between the difference signal and the summation signal, after which the signal power of the summation signal is resampled (step 5.11) with regard to the error signal.

Raw data

| FFT in range | 5.1

| Multiply by reference function | 5.2

| IFFT in range | 5.3

| Cross-range focusing by Doppler processing | 5.4

| FFT in range | 5.5

| Amplitude weighting of signal by means of summation weighting function | 5.6

| Amplitude weighting of signal by means of difference weighting function | 5.7

| IFFT in range | 5.8

| IFFT in range | 5.9

| Create error signal | 5.10

| Resampling of signal power in range direction | 5.11

Radar image

**Figure 5**

**Description**

The present invention relates to a method for improved range accuracy utilizing an amplitude-based monopulse technique. The method is suitable for radar systems where use is made of linearly frequency-modulated pulses.

According to the theory, range resolution is dependent on signal bandwidth. A number of different methods exist for generating broadband signals. Within coherent radar techniques, use is usually made of linear frequency modulation, on the one hand for its simplicity in pulse compression and on the other hand for its Doppler characteristics.

For modern radar systems, resolution at decimetre level is required increasingly often, and so the requirements for broadband solutions increase. In spite of the simplicity of creating signals with a large frequency sweep, these are in most cases difficult to handle. This is due to the fact that the spread of the signal in time and frequency is of decisive importance for the capacity and effectiveness of the system. As a long pulse length makes illumination of nearby areas impossible (referring to monostatic radar systems), short pulses are to be preferred. A large frequency bandwidth in turn makes demands on the sampling rate of the system. A large bandwidth requires a high sampling rate according to Nyquist's sampling theorem. This theorem is described in the reference Samir S. Soliman, Mandyam D. Srinath, "Continuous and Discrete Signals and Systems", ISBN 0-13-569112-5, Prentice-Hall.

A frequently used method for avoiding long, broadband signals is the utilization of a large number of short, narrowband sub-signals. By virtue of accurate frequency stepping of each sub signal in the transmitter, successful joining together can be carried out in the receiver. The signal processing operations used in the method are described in detail in the reference Andrew J. Wilkinson, Richard T. Lord, Michael R. Inggs, "Stepped-Frequency Processing by Reconstruction of Target Reflectivity Spectrum", Radar Remote Sensing Group, University of Cape Town, Rondebosch 7701, South Africa.

Random phase coding is another method for obtaining high resolution with a relatively short pulse length. By correlation between transmitted signal and echoes received, minimal signal spread is obtained with optimum phase coding. However, the method is not suitable for coherent radar systems where Doppler variation (pulse to pulse) which has arisen is utilized for cross-range focusing. Methods based on Doppler processing are described in inter alia the reference Walter G. Carrara, Ron S. Goodman, Ronald M. Majewski, "Spotlight Synthetic Aperture Radar, Signal Processing Algorithms", ISBN 0-89006-728-7, 1995, Artech House.

It is a common feature of all high-resolution methods that large quantities of data have to be processed and in most cases stored as well. This makes great demands on processor power and memory handling. For this reason, existing real-time systems generate only radar images with limited resolution. The disadvantages are thus limited possibilities for target separation and position finding. The invention proposes a method which makes possible high range accuracy by effective resampling of signal power.

The method according to the invention is characterized in that a set of signals after pulse compression (and cross-range focusing in the case of a multidimensional radar image), is utilized for generating a summation signal and a difference signal, in that the summation signal is created in the frequency domain by amplitude weighting of the original signal, in that the difference signal is created in the frequency domain by amplitude weighting of the original signal, in that the summation signal and the difference signal are transformed to the time domain, in that an error signal based on the quotient between the difference signal and the summation signal is formed, and in that the signal power of the summation signal is subsequently resampled with regard to the error signal.

Advantageously, the summation signal and the difference signal are formed in the frequency domain as linear frequency modulation makes possible controlled amplitude weighting of all targets.

According to another advantageous development of the method, the amplitude weighting functions are created by means of Taylor weighting. The introduction of the Taylor weighting results in effective sidelobe suppression combined with moderate main lobe widening.

According to a further advantageous development of the method according to the invention, the ratio between the difference signal and the summation signal in the amplitude weighting function is determined by checking. By virtue of the fact that the ratio can be adjusted, it is possible to arrive at an optimum setting.

In the method according to the invention, when resampling takes place, the signal power is advantageously concentrated to a few samples by optimizing the slope of the quotient between the difference signal and the summation signal during checking of the ratio between the difference signal and the summation signal in the amplitude weighting function. The signal power can then preferably be concentrated to at most three samples. Such a concentration of the signal power considerably improves the range accuracy.

The invention will be described in greater detail below with reference to accompanying drawings, in which:

Figure 1 shows the principles of linear frequency modulation.

Figure 2 shows a transmitted pulse and echoes received.

Figure 3 shows pulse-compressed echoes.

Figure 4 shows the propagation of the signal in the frequency domain.

Figure 5 shows a flow diagram for the method according to the invention.

Figure 6 shows a generated summation signal and difference signal respectively.

Figure 7 shows the amplitude weighting functions.

Figure 8 shows the error signals.

Figure 9 shows power-concentrated signals.

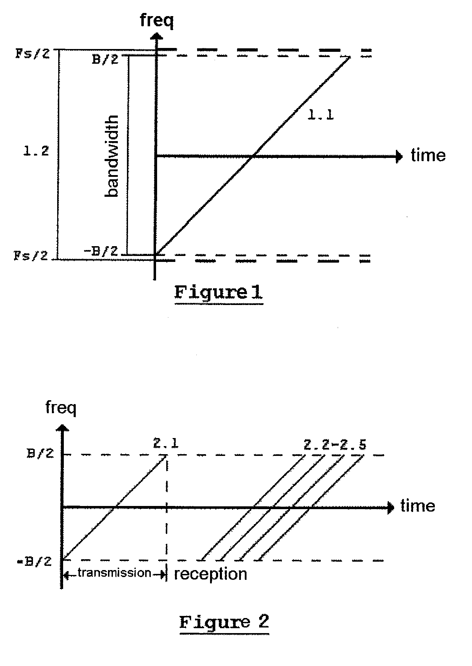

According to Figure 1, which clarifies the principles underlying linear frequency modulation, the method utilizes a positive frequency derivative (slope) according to 1.1. The signal is advantageously centered on the frequency zero, the sampling rate of the system thus being minimized according to 1.2. The signal then also has good frequency domain characteristics with regard to amplitude weighting.

In Figure 2, which illustrates a transmitted pulse according to 2.1 and counterparts received, a simulation case is set up, which consists of 4 point targets designated 2.2-2.5. The spacing of the simulated targets is set at 100 metres.

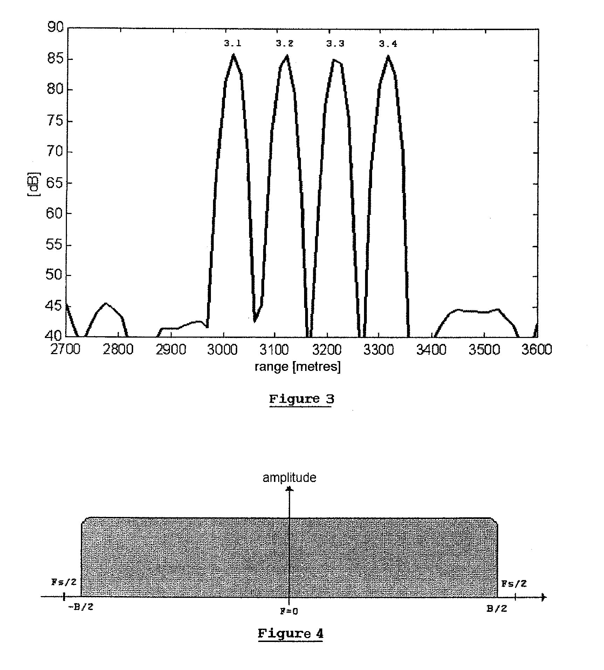

As the method according to the invention is applied to a pregenerated radar image, it is assumed that pulse compression has been carried out. Figure 3 illustrates a received set of signals after pulse compression. The compressed targets, see 3.1-3.4, have a spread in time which depends on the signal bandwidth used according to

$$\rho_r = \frac{c}{2B} \qquad \text{equ. 1}$$

where c corresponds to the propagation velocity of the signal and B designates the signal bandwidth. Pulse compression is discussed in the reference Donald R. Wehner, "High-Resolution Radar", ISBN 0-89006-727-9, 1995, Artech House.

As is already evident from the introduction to the description, problems arise when use is made of broadband signals. The method according to the invention aims to minimize the extent of the signal by more accurate positioning instead of increased resolution.

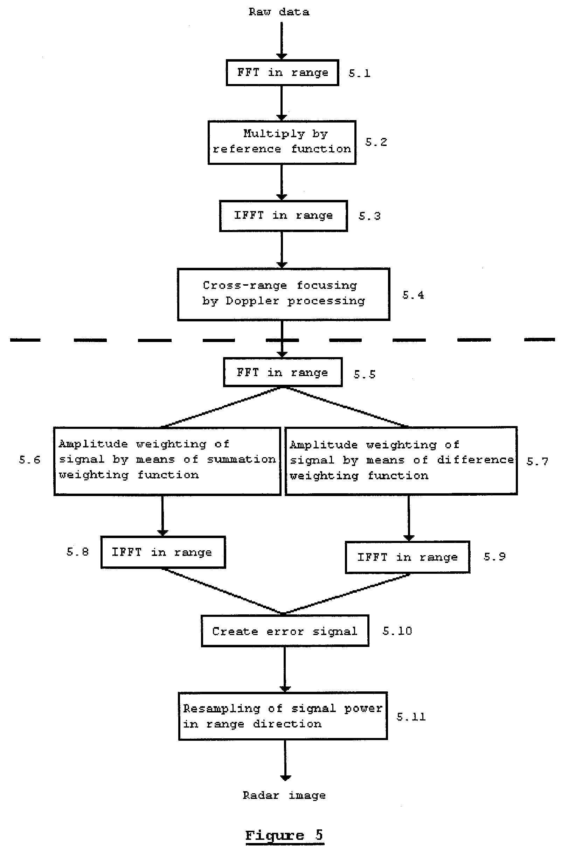

With reference to Figure 5, a more detailed description is given of how echoes received with the radar equipment are signal-processed. The flow chart in Figure 5 illustrates the signal processing steps which characterize the method according to the invention. Operations 5.1-5.4 correspond to any conventional image-generation algorithm and are consequently not included in the proposed method. The reference John C.

Curlander, Robert N. McDonough, "Synthetic Aperture Radar, Systems & Signal Processing", ISBN 0-471-85770-X, 1991, John Wiley & Sons, discusses this type of algorithms.

On the basis of the result obtained according to the previous paragraph, the signal processing which constitutes the main invention in the method to which this patent application relates is carried out.

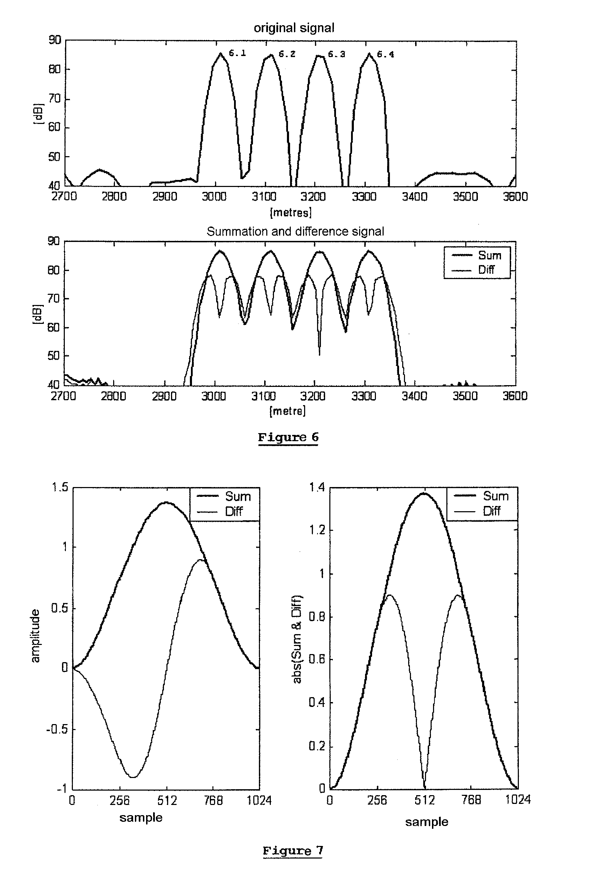

In step 5.5, the data set is Fourier-transformed in range and preferably using FFT (Fast Fourier Transform). The Fourier-transformed signal is amplitude-weighted with a proposed summation weighting function in a step 5.6 and, in parallel, with a proposed difference weighting function in a step 5.7. The weighting functions will be discussed in greater detail below with reference to primarily Figures 6, 7, 8 and 9. After amplitude weighting, the amplitude-weighted signals are inverse transformed in parallel steps 5.8 and 5.9, respectively, by IFFT (Inverse Fast Fourier Transform). It may be pointed out that even though the signal processing is described as being parallel in steps 5.6-5.9, the latter can be carried out in a common processing unit.

After IFFT in range, an error signal is created in a step 5.10 by quotient formation between the difference-weighted signal and the summation-weighted signal. The error signal is utilized in order to concentrate the signal power of the radar image by resampling in range, step 5.11.

The method according to the invention is illustrated below with reference to simulated curve shapes.

The signal which is transmitted is a linearly frequency-modulated signal, the frequency of which is shown as a function of time in Figure 1. The sampling frequency (Fs) of the system is adjusted after the maximum frequency component, $f_{max}$, of the signal (Fs is at least two times $f_{max}$). By centering the transmitted signal at zero frequency, this frequency component is given by half the signal bandwidth (B). The requirement for the sampling frequency is thus that it is to exceed the signal bandwidth, that is to say $Fs \geq B$. The transmitted signal has a pulse length corresponding to Tp. The linearly frequency-modulated signal has its lowest frequency component $f_{min} = -^B/_2$ at the time t = 0 and its highest frequency component $f_{max} = {}^B/_2$ at the time t = Tp. It can be seen from Figure 1 that the frequency has a linear characteristic with positive derivative (slope).

The data set received consists of a number of time-shifted copies of the transmitted signal, see 2.1, where Figure 2 illustrates a case in which four point reflectors, corresponding to 2.2-2.5, have been illuminated. As the targets have been positioned at a spacing of 100 metres, the four targets are identified by a range-dependent time shift according to $t_{delay} = \dfrac{2R_t}{c}$, where $R_t$ is the distance between targets and radar equipment.

As the system considered has limited signal bandwidth, only moderate resolution is obtained according to Figure 3. The method according to the invention makes it possible, through signal processing steps 5.5-5.11, for the correct position of the targets to be determined in spite of limited resolution.

In order to make it possible to use a monopulse technique in range, a summation signal and a difference signal must be created. This is possible only under certain conditions. The following points must be complied with:

    1. All targets must undergo equivalent processing.
    2. All Doppler processing, step 5.4, must be carried out before the summation signal and the difference signal are created.
    3. Linear frequency modulation.

Point 1 is complied with by carrying out amplitude weighting in the frequency domain where all targets have identical extents. Point 2 is complied with by using the finished (complex) radar image as input data.

The basic idea of the method is to produce, by means of amplitude weighting, a signal which can be equated with a summation signal. The amplitude weighting, which is frequency-dependent, is carried out as indicated above in the frequency domain. In order for it to be possible to generate the necessary range information, a difference signal also has to be created. Like the summation signal, the difference signal can be created by amplitude weighting.

Figure 4 shows the signal spread in the frequency domain for a selected bandwidth B and sampling frequency Fs. It may be noted that all received echoes are centred identically around the frequency zero. The linear relationship between time and frequency means that the sample order is maintained when the transformation takes place. This makes controlled amplitude weighting possible. After amplitude weighting, the data set is transformed back to the time domain, the desired signals thus having been created. At the same time, the total quantity of data has been doubled, as the output data consist of two channels.

In order to make the above reasoning clear, the steps performed are illustrated below with a simulation model with reference to Figures 6, 7, 8 and 9. The simulation geometry used consists of four point targets designated 6.1-6.4 positioned at the same direction and separated by a spacing of 100 metres. The upper part of Figure 6 shows the pulse-compressed targets as a function of range.

The initial operation corresponds to a transformation to the frequency domain. In this domain, the amplitude weighting is carried out. The weighting functions are based on the one hand on a faked summation signal and on the other hand on a corresponding difference signal. The amplitude weighting was created by means of Taylor weighting. The Taylor weighting is characterized by effective side lobe suppression combined with small main lobe widening. The proposed weighting functions are shown in Figure 7, where the left part shows the amplitude of the summation signal and the difference signal sample for sample, and the right part shows the absolute value of the amplitude of the summation signal and the difference signal sample for sample.

It may be noted here that amplitude weighting in the frequency domain corresponds to filtering in the time domain. In this case, the summation signal consists of a low-pass-filtered signal while the difference signal has been created by band-pass-filtering.

After the amplitude weighting, the summation and difference signals are transformed back to the time domain. Summation and difference signals according to the lower part of Figure 6 have now been created.

An effect clearly illustrated in figure 6 is that the amplitude weighting results in a moderate lobe widening (compare upper and lower diagram). The lobe widening can be accepted as an overall gain is obtained in comparison with an unprocessed radar image.

The way in which power concentration is carried out is explained below. The monopulse technique is based on moving the signal power to its correct position with the aid of what is known as an error signal. In this case, this involves first finding the correct range position of the targets and then concentrating all signal power to this position. The error signal required for this purpose is obtained through the quotient formation

$$\varepsilon = real\ part\left(\frac{\Delta}{\Sigma}\right) \qquad equ.\ 2$$

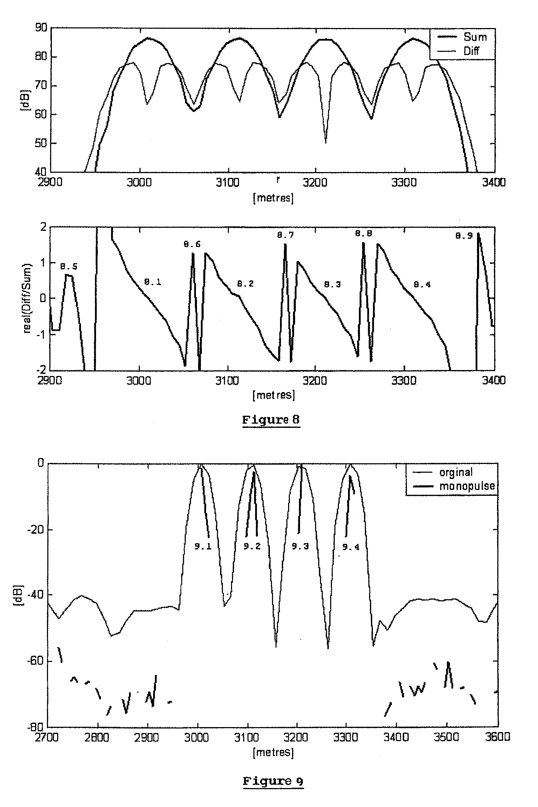

The lower part of Figure 8 illustrates a proposed error signal for simulated targets. It may be noted that the signal has the value zero in its correct position. For each target shown, an essentially linear portion, see 8.1-8.4, can be identified in the error signal. The slope of the linear portions is to be seen as a measure of how the signal power of the focused targets is to be moved. The slope of the error signals is adjusted so that its value is made to correspond to the number of pixels the signal is to be moved. The spikes 8.5-8.9 which occur between the targets are due to the signal overlap which exists.

By rescaling the slope of the curve based on the error quotient, simple resampling can be carried out. The resampling involves the signal power of the summation channel plotting as a function of corrected range position instead of actual range position. By optimizing the slope of the error quotient, all signal power can be concentrated around a few samples (in most cases 1-3 samples). This is illustrated in Figure 9, where the range accuracy has been considerably improved. The resampled portions corresponding to the inserted point targets 6.1-6.4 have been designated here by 9.1-9.4. The S/N level is also improved as signal power is added for actual targets. Noise is not concentrated with the proposed method.

**Claims**

1. Method for improved radar range accuracy utilizing an amplitude-based monopulse technique with linear frequency modulation, **characterized in that** the signal from a conventionally focused radar image is utilized for generating a summation signal and a difference signal in the range direction, **in that** the summation signal is generated in the frequency domain by amplitude weighting of the signal from the focused image, **in that** a difference signal is formed by amplitude weighting of the signal from the focused image, **in that** the summation signal and the difference signal are transformed to the time domain, **in that** an error signal is formed based on the quotient between the difference signal and the summation signal, and **in that** the signal power of the summation signal is resampled with regard to the error signal.

2. Method according to patent claim 1, **characterized in that** the difference signal is formed by amplitude weighting in the frequency domain.

3. Method according to one of the preceding patent claims, **characterized in that** the amplitude weighting functions are created by means of Taylor weighting.

4. Method according to one of the preceding patent claims, **characterized in that** the ratio between the difference signal and the summation signal in the amplitude weighting function is determined by checking.

5. Method according to one of the preceding patent claims, **characterized in that** the signal power is when resampling takes place concentrated to a few samples by optimizing the slope of the quotient between the difference signal and the summation signal during checking of the ratio between the difference signal and the summation signal in the amplitude weighting function.

5. Method according to patent claim 5, **characterized in that** the signal power is concentrated to at most three samples.

**Figure 1**

**Figure 2**

Figure 3

Figure 4

**Figure 5**

8

Figure 6

Figure 7

Figure 8

Figure 9

**European Patent Office**

## EUROPEAN SEARCH REPORT

Application Number

EP 04 44 5117

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 334 980 A (DECKER ET AL) 2 August 1994 (1994-08-02) | 1-4 | G01S13/26 G01S7/285 |
| A | * abstract; figures 3,4A-4C * * column 3, line 49 - column 5, line 34 * * column 6, line 6 - column 7, line 62 * ----- | 5,6 | |
| A | MERRYL I. SKOLNIK: "Introduction to radar systems (2nd Edition)" 1981, MCGRAW-HILL INTERNATIONAL BOOK COMPANY , XP002322827 * page 246, lines 6-19 * ----- | 1-6 | |
| | | | TECHNICAL FIELDS SEARCHED (Int.Cl.7) |
| | | | G01S |

The present search report has been drawn up for all claims

| Place of search | Date of completion of the search | Examiner |
|---|---|---|
| Munich | 12 April 2005 | Lopez de Valle, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 657 566 A1

## ANNEX TO THE EUROPEAN SEARCH REPORT
## ON EUROPEAN PATENT APPLICATION NO.

EP 04 44 5117

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2005

| Patent document cited in search report | Publication date | Patent family member(s) | Publication date |
|---|---|---|---|
| US 5334980 A | 02-08-1994 | NONE | |

EPO FORM P0459

For more details about this annex : see Official Journal of the European Patent Office, No. 12/82

12